# EUROPÄISCHE PATENTSCHRIFT

(11) **EP 0 461 381 B1**
(45) Veröffentlichungstag und Bekanntmachung des Hinweises auf die Patenterteilung: **05.01.1994**
(21) Anmeldenummer: 91107096.9
(22) Anmeldetag: 02.05.1991
(51) Int. Cl.: B62D 31/00

(54) **Laderaumabdeckung für Kraftwagen, insbesondere für Kombinations-Personenkraftwagen**
Cover for a luggage compartment for automobiles, particularly station wagons
Couvercle pour une soute à bagages pour automobiles, notamment breaks

(30) Priorität: 13.06.1990 DE 4018860
(43) Veröffentlichungstag der Anmeldung: 18.12.1991
(73) Patentinhaber: PETER BUTZ GmbH & Co Verwaltungs-KG, 40764 Langenfeld (DE)
(72) Erfinder:
(74) Vertreter: Ostriga, Harald

(56) Entgegenhaltungen:
- DE-A- 3 314 444
- DE-A- 3 906 196

## Beschreibung

Die Erfindung betrifft eine Laderaumabdeckung für Kraftwagen, insbesondere für Kombinations-Personenkraftwagen entsprechend dem Oberbegriff von Anspruch 1. Eine solche Laderaumabdeckung ist durch die DE-A-33 14 444 bekanntgeworden.

Bei der vorbeschriebenen bekannten Laderaumabdeckung wird die Abdeckplane mittels an den Führungsschienen selbst befestigter etwa buckelfederartiger Sperrkörper lösbar fixiert. Dies geschieht bei Offenstellung der Abdeckplane in einer zusammengeschobenen Position ihrer fluchtend aufeinanderfolgenden Führungskörper.

Für den Fall, daß beispielsweise beim Transport sperrigen Ladegutes die Abdeckplane stört, kann diese unter Überwindung der buckelartigen Sperrfedern insgesamt aus den stirnendseitigen Profilöffnungen der beiden Führungsschienen herausgezogen werden. Hierbei verliert die Abdeckplane allerdings ihren geordneten Zusammenhalt, den ihr sonst die Führungsschienen verleihen.

Bei einer anderen Laderaumabdeckung der DE-A-39 06 196 (angemeldet am 28.2.89 und veröffentlicht am 30.08.90) bilden beide einander gegenüberliegenden Magazinbereiche der beiden Führungsschienen je eine gesonderte Magazineinheit, welche endstirnseitig an je einer Führungsschiene leicht lösbar befestigt ist. Der Vorteil jener Laderaumabdeckung besteht darin, daß die Abdeckplane in ihrem herausgenommenen Zustand durch die beiden endseitigen Führungsschienenabschnitte geordnet zusammengehalten wird und bei Nichtbedarf in dieser zusammengehaltenen Position beiseitegestellt werden kann. Diesem Vorteil steht indes der Nachteil eines verhältnismäßig großen Bauaufwandes gegenüber. Hinzu kommt, daß die von den im Fahrzeug verbleibenden Führungsschienen abgelösten endseitigen Führungsschienenabschnitte deutlich sichtbare Lücken verursachen, die von manchem Fahrzeugeigentümer als unharmonisch und unschön empfunden werden.

Ausgehend von der eingangs beschriebenen bekannten Laderaumabdeckung gemäß der DE-A-13 14 444, liegt der Erfindung die Aufgabe zugrunde, die bekannte Laderaumabdeckung mit wesentlich einfacheren Mitteln als bisher so auszugestalten, daß die Abdeckplane bei Bedarf in leichter Weise als zusammenhängende geordnete Baueinheit entnommen, als solche beiseitegestellt und in ebenso einfacher und rascher Weise wieder eingesetzt werden kann.

Diese Aufgabe wird entsprechend der Erfindung dadurch gelöst, daß das Arretierteil von einem Kupplungsteil gebildet ist, welches Tragestäbe und/oder Führungskörper unabhängig von einer Führungsfunktion zwischen dem Führungsprofil der Führungsschiene und den Führungskörpern in Offenstellung der Abdeckplane leicht lösbar unmittelbar aneinanderkuppelt und welches gemeinsam mit der Abdeckplane bezüglich den Führungsschienen relativ bewegbar und von letzteren entfernbar ist.

Entsprechend der Erfindung ist das Arretierteil nicht mehr wie beim Gegenstand der DE-A-33 14 444 einer Führungsschiene zugeordnet. Vielmehr bildet das Arretierteil ein Kupplungsteil, welches die Tragstangen oder die Führungskörper unmittelbar in geordneter Weise lösbar aneinanderkuppelt. Dieses derart, daß die Abdeckplane in dem geordneten aneinandergekuppelten Zustand, das heißt in zusammengeschobener Position der fluchtend aufeinander folgenden Führungskörper, aus den Führungsschienen entfernbar, beispielsweise aus den endstirnseitigen Profilöffnungen herausziehbar, ist.

Die leicht lösbare Aneinanderkupplung der Tragestäbe oder der Führungskörper der Abdeckplane mittels des jeweiligen Kupplungsteils schafft somit im Bedarfsfalle eine Abdeckplane in Form einer kompakten Baugruppe, die in dieser geordneten zusammenhängenden Form nach ihrer einfachen und raschen Entnahme beiseitegestellt und ebenso einfach und rasch wieder eingesetzt werden kann.

Ein erheblicher Vorteil der Erfindung besteht auch darin, daß diese keinesfalls eine Änderung der Führungsschienen (wie beim Gegenstand der DE-A-39 06 196) zwingend voraussetzt. Vielmehr gestattet es eine Ausgestaltung der Erfindung, daß jedes Kupplungsteil innerhalb des Führungsprofils einer Führungsschiene aufgenommen ist.

Als zweckmäßig hat sich herausgestellt, daß die Abdeckplane an ihren beiden Längsseiten mit jeweils mindestens einem Kupplungsteil versehen ist.

Eine besonders bevorzugte erfindungsgemäße Ausführungsform besteht darin, daß das Kupplungsteil etwa klammerartig ausgebildet und zwei über einen stirnseitigen Steg miteinander verbundene Klammerschenkel aufweist, welche zwischen sich eine in Schließrichtung der Abdeckplane weisende Einführöffnung bilden und, die Führungskörper oder die Tragstangenenden außen übergreifend, zwischen sich aufnehmen.
In den Zeichnungen sind bevorzugte Ausführungsbeispiele entsprechend der Erfindung näher dargestellt, es zeigt,
Fig. 1 eine Draufsicht, teilweise mit bloßgelegt gezeichneten Bereichen, eines Teiles einer Laderaumabdeckung,
Fig. 2 einen Vertikalschnitt entsprechend der Schnittlinie II-II in Fig. 1,
Fig. 3 einen teilweisen Axialschnitt gemäß der Schnittlinie III-III in Fig. 1,
Fig. 4 einen teilweisen Horizontalschnitt gemäß der Schnittlinie IV-IV in Fig. 3,
Fig. 5 einen Vertikalschnitt entsprechend der Schnittlinie V-V in Fig. 4,
Fig. 6 in Anlehnung an Fig. 1 die Draufsicht auf eine andere Ausführungsform,
Fig. 7 einen Vertikalschnitt entsprechend der Schnittlinie VII-VII in Fig. 6,
Fig. 8 einen teilweise Axialschnitt entsprechend der Schnittlinie VIII-VIII in Fig. 6,
Fig. 9 einen teilweisen Horizontalschnitt entsprechend der Schnittlinie IX-IX in Fig. 8,
Fig. 10 einen Vertikalschnitt entsprechend der Schnittlinie X-X in Fig. 9,
Fig. 11 einen Vertikalschnitt entsprechend der Schnittlinie XI-XI in Fig. 8,
Fig. 12 einen teilweisen Axialschnitt durch eine andere Ausführungsform, gemäß welcher das Führungsschienenprofil mit einer Entnahmeklappe versehen ist,
Fig. 13 einen Vertikalschnitt entsprechend der Schnittlinie XIII-XIII in Fig. 12,
Fig. 14 in Anlehnung an die Darstellungsweise gemäß Fig. 13 eine zusätzliche Ausführungsform,
Fig. 15 einen Horizontalschnitt etwa gemäß der Schnittlinie XV-XV in Fig. 14,
Fig. 16 eine stark vergrößerte teilweise Axialschnittdarstellung gemäß der Schnittlinie XVI-XVI in Fig. 15,
Fig. 17 eine schematische Darstellung einer Führungskörper enthaltenen Kupplungsklammer,
Fig. 18 eine Draufsicht auf die Kupplungsklammer entsprechend dem Ansichtsteil XVIII in Fig. 17, jedoch ohne Führungskörper,
Fig. 19 in Anlehnung an Fig. 17 eine weitere Ausführungsform,
Fig. 20 einen Horizontalschnitt etwa entsprechend der Schnittlinie XX-XX in Fig. 19,
Fig. 21 eine andere abgewandelte Ausführungsform in Anlehnung an die Darstellungsweise gemäß Fig. 19 und
Fig. 22 einen Schnitt etwa entsprechend der Schnittlinie XXII-XXII in Fig. 21.

In den Zeichnungen ist jede Laderaumabdeckung unabhängig von der jeweiligen Ausführungsform mit der Bezugsziffer 10 bezeichnet.

Wesentlicher Bestandteil der Laderaumabdeckung 10 ist eine Abdeckplane 15, welche eine einfaltbare Abdeckbahn 14 aufweist, die von Tragestäben 12 gehalten ist, deren jeweils beidendseitig angeordnete Führungskörper 13 in Führungsschienen 11 beweglich sind. Die Führungsschienen 11 sind etwa im Parallelabstand zueinander in nicht dargestellter Weise im Kofferraum eines Kombinationskraftwagens od. dgl. montiert.

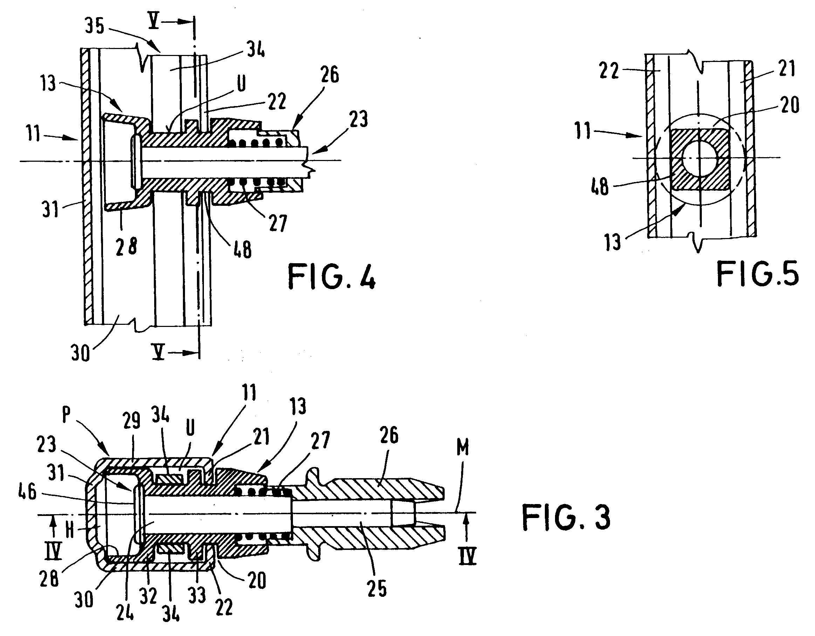

Wie z.B. aus Figur 3 zu ersehen, sind die Führungsschienen 11 insgesamt etwa C-förmig hinterschnitten. Hierdurch können die Führungskörper 13 in noch näher zu beschreibender Weise innerhalb des hinterschnittenen Hohlraums H entlang der Längsmittelachse M sowohl der Führungskörper 13 als auch der Tragestäbe 12 unter Berücksichtigung einer Federkraft 27 mit begrenztem Axialverstellweg zug- und druckfest aufgenommen werden.

Entsprechend den dargestellten Beispielen soll die Abdeckplane 15 fünf Tragestäbe 12 aufweisen, von denen z.B. nur der in Öffnungsrichtung A vorderste Tragestab 12 eingezeichnet ist, während die übrigen Tragestäbe 12 lediglich, durch ihre Längsachsen 16, 17, 18 und 19 vertreten, symbolhaft angedeutet sind.

Jede Führungsschiene 11 umschließt den Führungshohlraum H mit zwei im Parallelabstand voneinander angeordneten Profilstegen 29, 30, die über einen Profilboden 31 miteinander verbunden sind. Endseitig tragen die Profilstege 29, 30 nach innen gerichtete Profilflansche 21, 22, welche Führungsrippen bilden, die von oben und unten her in eine führungskörperseitige Umfangsnut 20 eingreifen.

Der Führungskörper 13 ist koaxial von einer Führungskörperachse 23 durchsetzt, welche außenendseitig einen Anschlagbund 46 trägt. An den Anschlagbund 46 schließt sich, nach innen gerichtet, ein Gleitschaftbereich 24 an. Der Gleitschaftbereich 24 kann aus seiner zugfesten Position bezüglich des Führungskörpers 13 entgegen der Rückstellkraft der Schraubendruckfeder 27 um einen begrenzten Axialhub nach innen bewegt werden, um auf diese Weise einer Schrägführungsverklemmung beim Bewegen der Abdeckplane 15 in Öffnungsrichtung A oder in Schließrichtung B entgegenzuwirken. Auch werden hierdurch Breitentoleranzen des kraftfahrzeugseitigen Einbaufeldes berücksichtigt.

An den kreiszylindrischen Gleitschaftbereich 24 der Führungskörper-Achse 23 schließt sich ein Befestigungsbereich 25 an, der einen dübelartigen Spreizkörper 26 trägt, welcher verankernd in den Axialhohlraum eines jeden rohrförmigen Tragestabes 12 eingreift.

Insbesondere zur Aufnahme des Axialhubes des Gleitschaftbereichs 24 mit Anschlagbund 46 weist der Führungskörper 13 außenendseitig einen etwa topfartigen Bereich 28 auf, dessen topfbodenartiger Teil 32 eine Schulter bildet, die gemeinsam mit einer von ihr axial beabstandeten zusätzlichen führungskörperseitigen Schulter 33 eine Umfangsnut U begrenzt.

Das gesamte Profil der Führungsschiene 11 ist übrigens mit P bezeichnet.

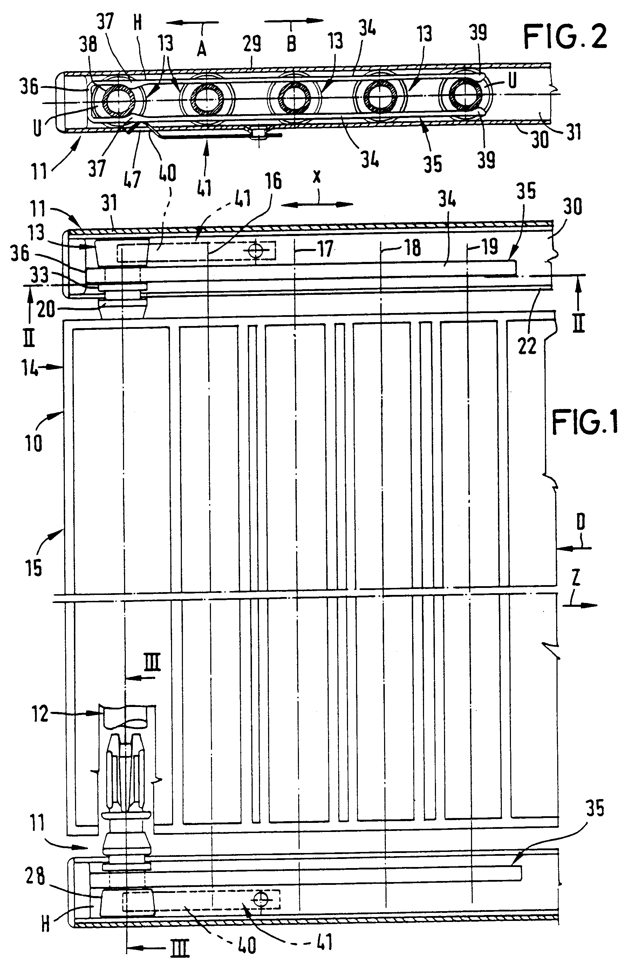

Aus dem Zusammenhang der Fig. 1-4 wird deutlich, daß die Führungskörper 13, welche sich bei Offenstellung in Richtung A der Abdeckplane 15 in einer geordneten aufeinanderfolgenden Position befinden, im Bereich ihrer Umfangsnuten U unter- und oberseitig von zwei Klammerschenkeln 34 einer als Kupplungsteil ausgebildeten Kupplungsklammer 35 umgriffen sind.

Die beiden Klammerschenkel 34 sind mittels eines in Öffnungsrichtung A vorne angeordneten stirnseitigen Klammersteges 36 einstückig-stoffschlüssig miteinander verbunden. Nach innen aufeinanderzu gerichtete Rastbuckel 37 an den beiden Klammerschenkeln 34 sorgen für eine nahezu unlösbare bzw. schwer lösbare Aufnahme der beiden diametral gegenüberliegenden in Öffnungsrichtung A vordersten Führungskörper 13 im Bereich deren Umfangsnuten U. Die beiden Rastbuckel 37 definieren so jeweils eine Rastöffnung 38.

Die in Schließrichtung B weisenden freien Enden der Klammerschenkel 34 tragen ebenfalls nach innen aufeinanderzu weisende Rastbuckel 39, welche jeweils einen in Schließrichtung B vorderen Führungskörper 13 im Bereich von dessen Umfangsnut U lösbar schnappverrastend und leichter lösbar übergreifen.

Ein Rückhaltebuckel 40 einer am unteren führungsschienenseitigen Profilsteg 30 an ihrem einen Ende befestigten Sperrfeder 41 durchgreift den Profilsteg 30 und legt somit den jeweiligen Führungskörper 13 an dessen topfförmigem Bereich 28 fest.

Die allgemeine Bewegungsrichtung der Abdeckplane 15, die regelmäßig parallel zur Fahrtrichtung des Kraftfahrzeuges verläuft, ist mit dem Doppelpfeil x bezeichnet.

Die Funktion der Laderaumabdeckung 10, welche grundsätzlich für alle dargestellten Ausführungsformen dieselbe ist, sei nun anhand des in den Fig. 1-5 dargestellten Ausführungsbeispiels erläutert:

Gemäß den Fig. 1 und 2 befindet sich die Abdeckplane 15 in ihrer Offenstellung, das heißt sämtliche Tragestäbe 12 mit ihren endseitigen Führungskörpern 13 sind einschließlich im einzelnen nicht dargestellter Einfaltbereiche der Abdeckbahn 14 in Öffnungsrichtung A gewissermaßen auf Block zusammengeschoben.

Wenn nun die Abdeckplane 15 geschlossen werden soll, geschieht dies durch Angreifen einer Zugkraft Z, die bewirkt, daß die einzelnen Tragestäbe, welche stellvertretend durch ihre Längsachsen 16, 17, 18, 19 dargestellt sind, über die endseitigen Rastbuckel 39 der Klammerschenkel 34 hinweg in Schließrichtung B gleiten. Der in Öffnungsrichtung A vorderste Tragestab 12, dessen beide Führungskörper 13 relativ fest in den Rastöffnungen 38 der jeweiligen Kupplungsklammer 35 aufgenommen sind, können bei Anwendung einer üblichen Zugkraft Z nicht aus den Rastöffnungen 38 herausgezogen werden. Für eine Sperrlage des in Öffnungsrichtung A vordersten Tragestabes 12 sorgen im übrigen - wie bereits weiter oben erwähnt - die Stahlblatt-Sperrfedern 41 mit ihren Rückhaltebuckeln 40. Letztere durchgreifen die Stege 30 der Führungsschienen 11 in Aussparungen 47.

Nach Öffnen der Abdeckplane 15 in Richtung A, das heißt durch Ausüben einer Druckkraft D am in Schließrichtung B vorderen Ende der Abdeckplane 15, ergibt sich schließlich wieder das Bild gemäß den Fig. 1 und 2, wonach auch die Tragestäbe 12 mit ihren Längsachsen 16-19 schnappverrastend in den Kupplungsklammern 35 aufgenommen sind.

Wenn man nun an beiden Schienen 11 die Sperrfedern 41 beidseitig löst, was z.B. durch geeignete Tasten oder Hebel geschehen kann, kann man die gesamte Abdeckplane 15, deren endseitige Führungskörper 13 mittels der beiden endseitigen Kupplungsklammern 35 aneinandergekuppelt sind, als zusammenhängende Baugruppe aus den in Schließrichtung B vorderen Öffnungen der Führungsprofile P bei Bedarf leicht herausnehmen und ebenso leicht wieder einführen, so daß sich wieder die Situation gemäß den Fig. 1 und 2 ergibt.

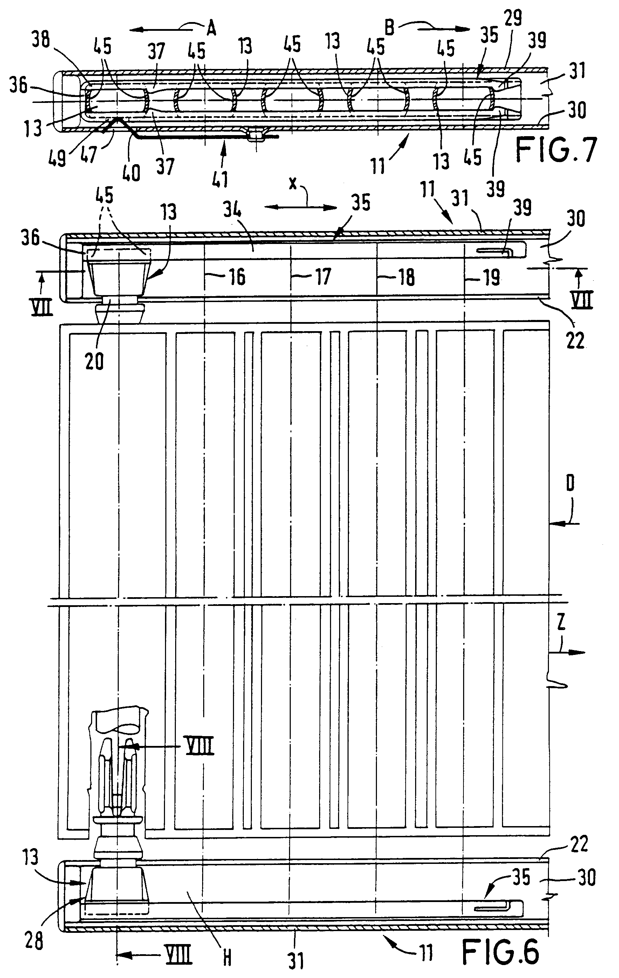

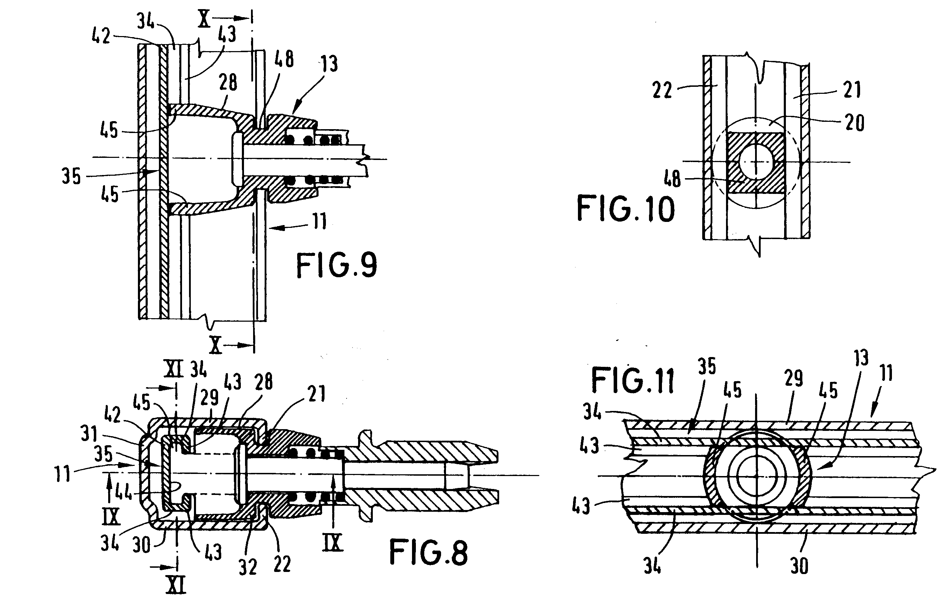

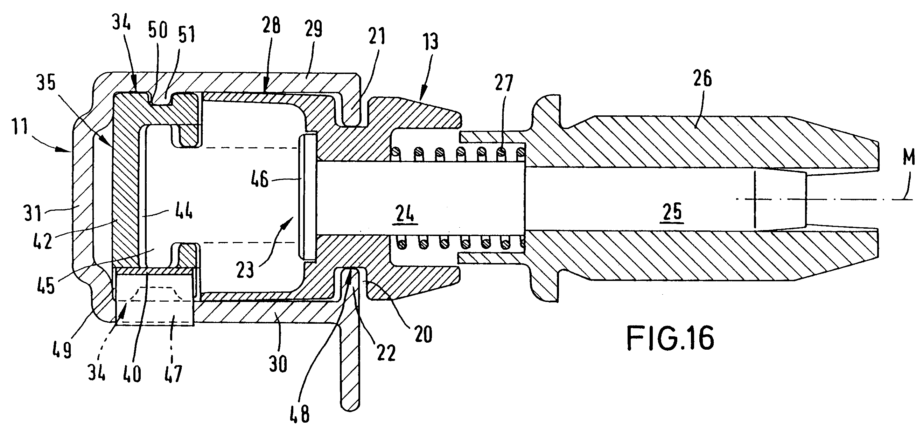

In den Ausführungsformen gemäß den Fig. 6-11 sowie 14-16 ist jeweils eine Kupplungsklammer 35 gezeigt, deren beide Klammerschenkel 34 außenseitig mittels eines Klammerbodens 42 stoffschlüssig miteinander verbunden sind. Auf diese Weise bildet die Kupplungsklammer 35 mit ihren Klammerschenkeln 34, ihrem Klammerboden 42 und ihren frei nach innen vorragenden klammerschenkelseitigen Rippen 43 einen etwa T-förmigen hinterschnitten Hohlraum 44.

Dieser T-förmig hinterschnittene Hohlraum 44 nimmt zwei stirnendseitig des Führungskörpers 13 angeordnete T-förmig hinterschnittene Ansätze 45 formschlüssig auf. Um eine Umfangsorientierung der beiden T-förmig hinterschnittenen Ansätze 45 zu gewährleisten, bildet der Führungskörper 13 im Bereich seiner Nut 20 einen zwischen den beiden Führungsrippen 21, 22 der Führungsschiene 11 gegen Umfangsdrehung gesicherten Vierkantquerschnitt 48, der zudem die Axialbewegung entlang x der Führungskörper 13 nicht behindert.

Anhand der Fig. 6-11 sowie 14-16 ist ohne weiteres vorstellbar, daß die Kupplungsklammern 35 von den stirnendseitigen T-förmig hinterschnittenen Ansätzen 45 der Führungskörper 13 getragen sind. Die Funktion der Kupplungsklammer 35 ist bei den Ausführungsbeispielen gemäß den Fig. 6-11 sowie 14-16 vom Grundsatz her dieselbe, wie im Zusammenhang mit den Fig. 1-5 dargelegt.

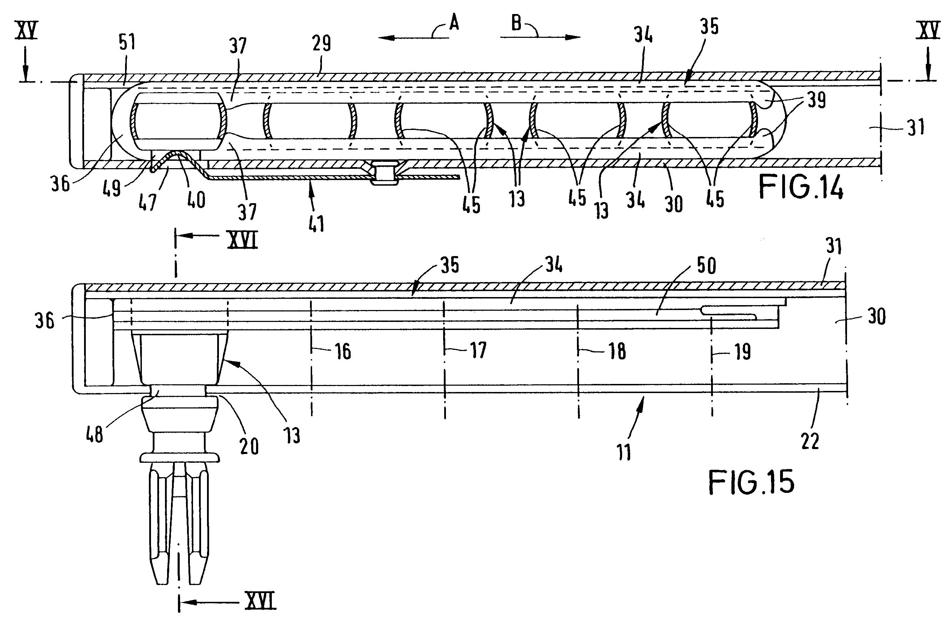

Aus den Fig. 14-16 sind noch Besonderheiten zu ersehen, insofern nämlich, als der untere Klammerschenkel 34 an seinem in Öffnungsrichtung A vorderen Endbereich eine Durchgriffsöffnung 49 für den Rückhaltebuckel 40 der Sperrfeder 41 aufweist. Entsprechend dieser Ausführungsform wird also der in Öffnungsrichtung A vorderste Tragestab 12 mittelbar über die Sperrfeder 41 in der dargestellten Lage lösbar fixiert.

Aus den Fig. 14-16 ist noch zu ersehen, daß der obere Klammerschenkel 34 der Kupplungsklammer 35 eine Axialnut 50 aufweist, in welche eine nach innen vorstehende Rippe 51 des oberen Profilsteges 29 der Führungsschiene 11 eingreift.

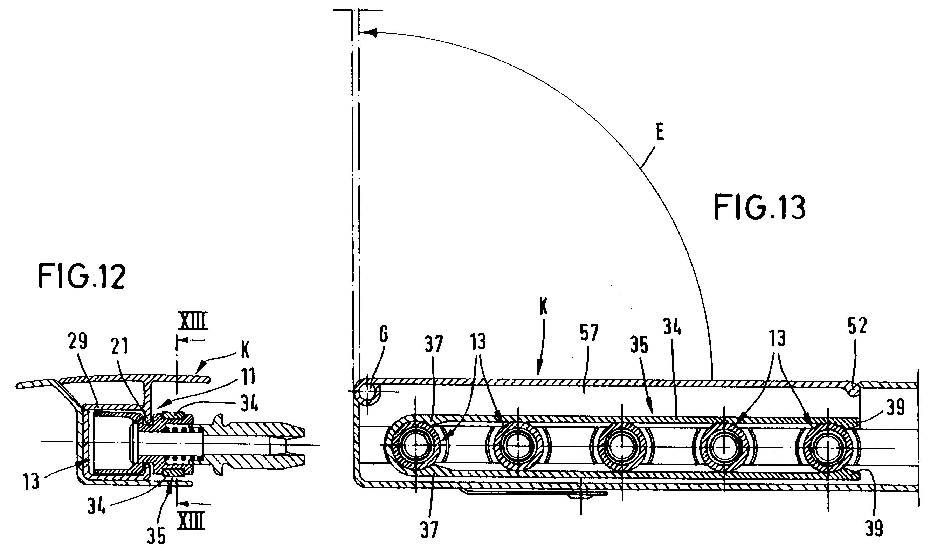

Die Funktion der Kupplungsklammer 35 gemäß den Fig. 12 und 13 ist hinsichtlich ihres Zusammenwirkens mit dem Führungskörper 13 identisch mit der in den Fig. 1-5 dargestellten Ausführungsform. Nur befindet sich entsprechend den Fig. 12 und 13 die Umfangsnut U zur Aufnahme der beiden Klammerschenkel 34 der Kupplungsklammer 35 innen neben der mit den beiden führungsschienenseitigen Profilrippen 21, 22 zusammenwirkenden Umfangsnut 20 des Führungskörpers.

Auch bildet der obere Profilsteg 29 entsprechend den Figuren 12 und 13 Bestandteil einer Klappe K, die um eine Gelenkachse G herum entlang dem Schwenkpfeil E geöffnet oder geschlossen und in Geschlossenlage mittels eines Verriegelungsnockens 52 lösbar arretiert werden kann.

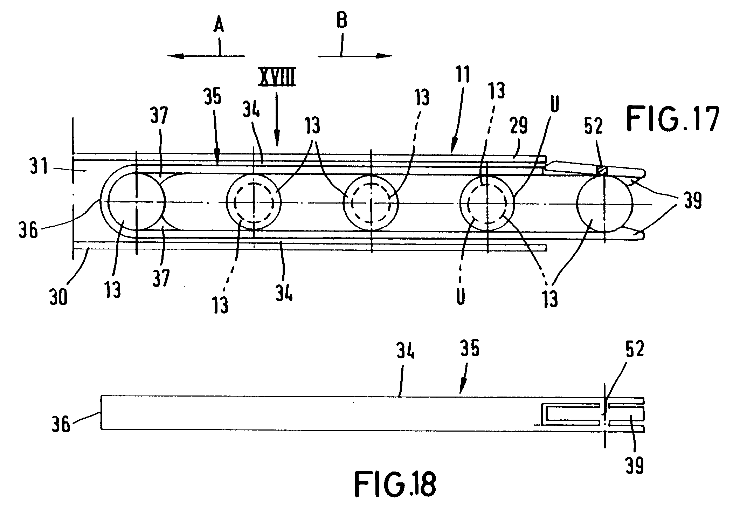

Die Fig. 17 und 18 zeigen eine Kupplungsklammer 35, deren oberer Rastbuckel 39 Bestandteil einer etwa wippenförmigen Anordnung bildet, welche über einen Mittelsteg 52 mit dem Klammerschenkel 34 stoffschlüssig verbunden ist. Überhaupt bilden alle Kupplungsbauteile, insbesondere die Kupplungsklammern 35, zweckmäßig Spritzgußteile aus geeignetem Kunststoff.

In Fig. 17 ist auch gezeigt, daß die gestrichelt angedeuteten Führungskörper (13) bei U die Einführöffnung 39, 39 frei, also nahezu widerstandslos durchlaufen können, weil der Durchmesser von U geringer ist als der Abstand zwischen den Rastbuckeln 39. Die jeweils in Öffnungsrichtung A bzw. in Schließrichtung B vordersten Führungskörper 13 weisen Umfangsnuten U größeren Durchmessers auf, die eine Verrastung bei 38 bzw. 39, 39 gewährleisten.

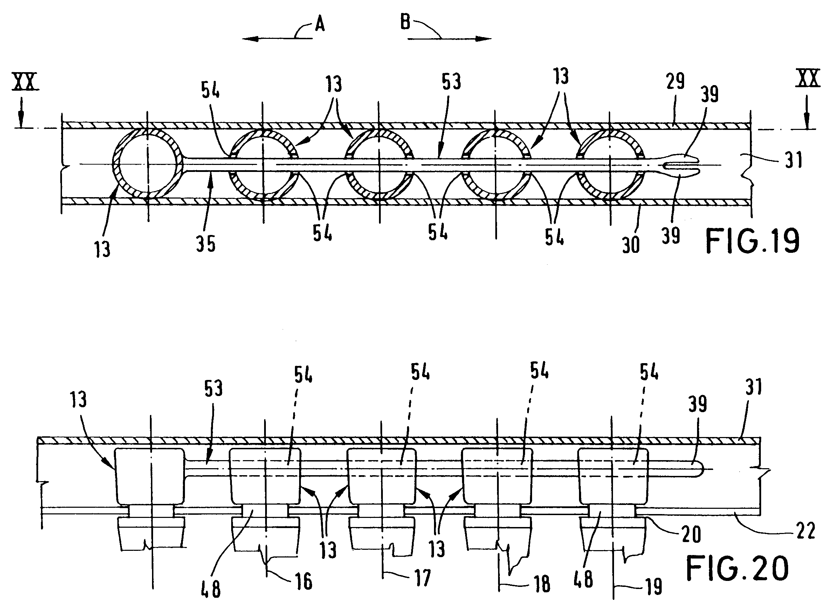

Gewissermaßen ein zentralklammerartiges Bauteil ist in den Fig. 19 und 20 dargestellt. Dieses Kupplungsteil 35 bildet einen vom in Öffnungsrichtung A vordersten Führungskörper 13 nach rückwärts in Schließrichtung B vorragenden etwa splintartig langgestreckten Körper bzw. Fortsatz 53, dessen freies Ende in zwei die Rastbuckel 39 bildende Federschenkel aufgeteilt ist.

Jeder Führungskörper 13 entsprechend den Längsachsen 16 bis 19 ist mit einer durchgängigen Rastöffnung 54 versehen, die der Fortsatz 53 durchsetzt und welche über die Rastbuckel 39 hinweg aufgerastet sind.

Es ist ohne zusätzliche weitere Beschreibung vorstellbar, daß die Bedienungsfunktion beim Ausführungsbeispiel gemäß den Fig. 19 und 20 grundsätzlich identisch ist mit der Funktion der vorbeschriebenen Ausführungsformen. Auch beim Ausführungsbeispiel gemäß den Fig. 19 und 20 ist es wichtig, daß die Führungskörper 13 über Vierkantbereiche 48 an den Führungsrippen 20, 21 der Führungsschiene 11 gegen Umfangsdrehung gesichert sind.

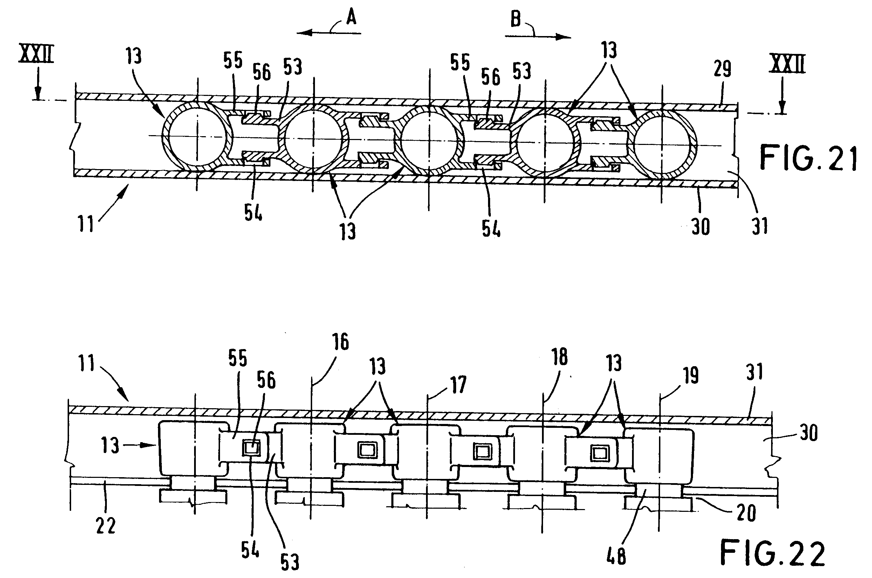

Beim Ausführungsbeispiel entsprechend den Fig. 21 und 22 ist jedem einzelnen Führungskörper 13 eine gesonderte Klammerfunktion zugeordnet. So bildet der in Öffnungsrichtung A vorderste Führungskörper 13 zwei in Schließrichtung B weisende Rastarme 55, welche endseitig die Rastöffnungen 54 tragen, in welche Rastnocken 56 von in Öffnungsrichtung A weisenden Fortsätzen 53 eingreifen.

Die übrigen Führungskörper entsprechend den Längsmittelachsen 16-19 sind in Öffnungsrichtung A mit Fortsätzen 53 und in Schließrichtung B mit Rastarmen 55 versehen. Auch im Falle der Ausführungsbeispiele gemäß den Fig. 21 und 22 sind die einzelnen Führungskörper 13 über Vierkantquerschnitte 48 an den Führungsrippen 21, 22 der Führungsschiene 11 gegen Umfangsdrehung gesichert.

## Patentansprüche

1. Laderaumabdeckung für Kraftwagen, insbesondere für Kombinations-Personenkraftwagen, mit einer in einer zusammengeschobenen Offenstellung oder in einer auseinandergezogenen Geschlossenstellung haltbaren, mindestens teilweise flexiblen Abdeckplane, an welcher im Parallelabstand voneinander Tragestäbe befestigt sind, von denen jeder an seinen beiden freien Enden je einen Führungskörper trägt, welcher jeweils vom Führungsprofil einer sich im wesentlichen rechtwinklig zum Tragestab erstreckenden karosserieseitigen Führungsschiene in deren Längsrichtung relativ bewegbar formschlüssig aufgenommen ist, wobei mindestens ein Arretierteil vorhanden ist, welches die Abdeckplane in einer zusammengeschobenen Position ihrer fluchtend aufeinanderfolgenden Führungskörper lösbar fixiert, dadurch gekennzeichnet, daß das Arretierteil von einem Kupplungsteil (35) gebildet ist, welches Tragestäbe (12) und/oder Führungskörper (13) unabhängig von einer Führungsfunktion zwischen dem Führungsprofil (P) der Führungsschiene (11) und den Führungskörpern (13) in Offenstellung (bei A) der Abdeckplane (15) leicht lösbar unmittelbar aneinanderkuppelt und welches gemeinsam mit der Abdeckplane (15) bezüglich der Führungsschienen (11) relativ bewegbar und von letzteren entfernbar ist.

2. Laderaumabdeckung nach Anspruch 1, dadurch gekennzeichnet, daß jedes Kupplungsteil (35) innerhalb des Profils, insbesondere innerhalb des Führungsprofils (P) einer Führungsschiene (11) aufgenommen ist.

3. Laderaumabdeckung nach Anspruch 1, dadurch gekennzeichnet, daß jedes Kupplungsteil (35) außerhalb des Führungsprofils (P) angeordnet ist.

4. Laderaumabdeckung nach einem der vorangehenden Ansprüche, dadurch gekennzeichnet, daß die Abdeckplane (15) an beiden den Führungsschienen (11) parallelen Längsseiten mit jeweils mindestens einem Kupplungsteil (35) versehen ist.

5. Laderaumabdeckung nach einem der vorangehenden Ansprüche, dadurch gekennzeichnet, daß das Kupplungsteil (35) etwa klammerartig ausgebildet ist und zwei über einen stirnseitigen Steg (36) miteinander verbundene Klammerschenkel (34) aufweist, welche zwischen sich eine in Schließrichtung (B) der Abdeckplane (15) weisende Einführöffnung (bei 39) bilden und, die Führungskörper (13) oder die Enden der Tragstangen (12) außen übergreifend, zwischen sich aufnehmen.

6. Laderaumabdeckung nach Anspruch 5, dadurch gekennzeichnet, daß das klammerartige Kupplungsteil (35) die Führungskörper (13) zwischen jeweils zwei führungskörperseitigen Zentrierschultern (32, 33) übergreift.

7. Laderaumabdeckung nach einem der Ansprüche 1 bis 5, dadurch gekennzeichnet, daß das klammerartige Kupplungsteil (35) die Führungskörper ( 13) stirnendseitig mit einem hinterschnittenen Hohlraum (44) formschlüssig übergreift.

8. Laderaumabdeckung nach Anspruch 7, dadurch gekennzeichnet, daß das klammerartige Kupplungsteil (35) mit einem T-förmig hinterschnittenen Hohlraum (44) mindenstens einen stirnendseitigen T-förmig hinterschnittenen Ansatz (45) des jeweiligen Führungskörpers (13) übergreift.

9. Laderaumabdeckung nach einem der vorangehenden Ansprüche, dadurch gekennzeichnet, daß das Kupplungsteil (35) den in Öffnungsrichtung (A) der Abdeckplane (15) vordersten Führungskörper (13) festlegt (bei 38).

10. Laderaumabdeckung nach Anspruch 9, dadurch gekennzeichnet, daß das Kupplungsteil (35) den in Öffnungsrichtung (A) der Abdeckplane (15) vordersten Führungskörper (13) lösbar oder schwer lösbar, wie z.B. mit einer Rastöffnung (38) od.dgl., festlegt.

11. Laderaumabdeckung nach einem der vorangehenden Ansprüche, dadurch gekennzeichnet, daß Führungskörper (13) vorhanden sind, welche die Einführöffnung (39, 39) frei (bei U) durchlaufen.

12. Laderaumabdeckung nach Anspruch 11, dadurch gekennzeichnet, daß die die Einführöffnung (39, 39) frei (bei U) durchlaufenden Führungskörper (13) jeweils einem in Schließrichtung (B) vorderen Führungskörper (13), der mit der Einführöffnung (39, 39) verrastet, in Öffnungsrichtung (A) vorgeschaltet sind.

13. Laderaumabdeckung nach einem der vorangehenden Ansprüche, dadurch gekennzeichnet, daß der in Öffungsrichtung (A) der Abdeckplane (15) vorderste Führungskörper (13) fest, z.B. stoffschlüssig od.dgl., mit dem Kupplungsteil (35) verbunden ist (Fig. 19, 20).

14. Laderaumabdeckung nach einem der vorangehenden Ansprüche, dadurch gekennzeichnet, daß jedes Kupplungsteil (35) mindestens einen Rastfortsatz (53) bildet, welcher in eine Rastöffnung (54) eines Tragestabes (12) oder eines Führungskörpers (13) lösbar kuppelnd eingreift.

15. Laderaumabdeckung nach Anpruch 14, dadurch gekennzeichnet, daß jedem Tragestab (12) oder Führungskörper (13) mindestens ein Rastfortsatz (53) zugeordnet ist, welcher jeweils mit einer Rastöffnung (54) des unmittelbar benachbarten Tragestabes (12) oder Führungskörpers (13) zusammenwirkt (Fig. 21, 22).

16. Laderaumabdeckung nach Anspruch 14, dadurch gekennzeichnet, daß jeweils einem in Schließ- (B) oder Öffnungsrichtung (A) der Abdeckplane (15) vorderen Tragestab (12) oder Führungskörper (13) ein Rastfortsatz (53) zugeordnet ist, welcher in Offenstellung (bei A) der Abdeckplane (15) alle übrigen Tragestäbe (12) oder Führungskörper (13) durchgreift und welcher die Rastöffnung (54) des jeweils in Öffnungs- (A) oder Schließrichtung (B) vorderen Tragestabes (12) oder Führungskörpers (13) lösbar kuppelnd durchgreift (Fig. 19, 20).

17. Laderaumabdeckung nach einem der vorangehenden Ansprüche, dadurch gekennzeichnet, daß das in Schließrichtung (B) und / oder in Öffnungsrichtung (A) vordere Kupplungsteil (35) bezüglich der zugeordneten Führungsschiene (11) lösbar verriegelt ist.

18. Laderaumabdeckung nach einem der vorangehenden Ansprüche, dadurch gekennzeichnet, daß die Abdeckplane (15) in der zusammengeschobenen, gekuppelten Position (bei A) ihrer Tragestäbe (12) oder Führungskörper (13) den stirnendseitigen Profilöffnungen der beiden Führungsschienen (11) entnehmbar oder zuführbar ist.

19. Laderaumabdeckung nach einem der vorangehenden Ansprüche, dadurch gekennzeichnet, daß die Abdeckplane (15) in der zusammengeschobenen, aneinandergekuppelten Position ihrer Tragestäbe (12) oder Führungskörper (13) durch mittels Klappen (K) verschließbare Klappenöffnungen (57) den führungsschienenseitigen Führungsprofilen (P) entnehmbar oder zuführbar ist

20. Laderaumabdeckung nach einem der vorangehenden Ansprüche, dadurch gekennzeichnet, daß die Führungskörper (13) oder die Tragstangen (12) gegen Umfangsdrehung um ihre Längsmittelachse (M) gesichert sind (bei 48, bei 21, 22).

## Claims

1. Boot space cover for vehicles, in particular for estate cars, with a tarpaulin which is at least partially flexible and can be maintained in a telescoped open position or extended closed position, to which bearing rods at a parallel distance from each other are secured, both free ends of each of which carry a guide body each of which is positively received by the guide profile of a guide rail on the car body side extending essentially at right angles to the bearing rod in its longitudinal direction in a relatively movable manner, at least one locking part being present which fixes the tarpaulin in a telescoped position of its in-line successive guide bodies in a detachable manner, characterized in that the locking part is formed by a coupling part (35) which couples together directly and in a readily detachable manner bearing rods (12) and/or guide bodies (13) independently of a guide function between the guide profile (P) of the guide rail (11) and the guide bodies (13) in the open position (at A) of the tarpaulin (15) and which together with the tarpaulin (15) is relatively movable with respect to the guide rails (11) and can be removed from the latter.

2. Boot space cover according to Claim 1, characterized in that each coupling part (35) is received inside the profile, in particular inside the guide profile (P) of a guide rail (11).

3. Boot space cover according to Claim 1, characterized in that each coupling part (35) is arranged outside the guide profile (P).

4. Boot space cover according to one of the preceding claims, characterized in that the tarpaulin (15) is provided with at least one coupling part (35) on both longitudinal sides parallel to the guide rails (11).

5. Boot space cover according to one of the preceding claims, characterized in that the coupling part (35) is designed roughly like a clamp and has two clamp legs (34), connected together via a front-face web (36), which between them form an insertion opening (at 39) facing in closing direction (B) of the tarpaulin (15) and receive between them the guide bodies (13) or the ends of the bearing rods (12), overlapping on the outside.

6. Boot space cover according to Claim 5, characterized in that the clamp-like coupling part (35) overlaps the guide bodies (13) between two centring shoulders (32, 33) in each case on the guide body side.

7. Boot space cover according to one of claims 1 to 5, characterized in that the clamp-like coupling part (35) positively overlaps the guide bodies (13) on the front side with an undercut cavity (44).

8. Boot space cover according to Claim 7, characterized in that the clamp-like coupling part (35) with a T-shape undercut cavity (44) overlaps at least one front-end T-shape undercut lug (45) of the appropriate guide body (13).

9. Boot space cover according to one of the preceding claims, characterized in that the coupling part (35) fixes the guide body (13) which is at the front in the opening position (A) of the tarpaulin (15) (at 38).

10. Boot space cover according to Claim 9, characterized in that the coupling part (35) fixes the guide body (13) that is at the front in opening direction (A) of the tarpaulin (15) in a detachable or difficultly detachable manner, such as with a latch opening (38) or similar, for example.

11. Boot space cover according to one of the preceding claims, characterized in that guide bodies (13) are present which pass freely through the insertion opening (39, 39) (at U).

12. Boot space cover according to Claim 11, characterized in that the guide bodies (13) passing freely through the insertion opening (39, 39) (at U) are in each case upstream of a guide body (13) at the front in closing direction (B), which latches with the insertion opening (39, 39), in opening direction (A).

13. Boot space cover according to one of the preceding claims, characterized in that the guide body (13) which is at the front in the opening direction (A) of the tarpaulin (15) is firmly connected to the coupling part (35), e.g. by material constraint or similar (Figs. 19, 20).

14. Boot space cover according to one of the preceding claims, characterized in that each coupling part (35) forms at least one latch extension (53) which engages in a detachably coupling manner in a latch opening (54) of a bearing rod (12) or a guide body (13).

15. Boot space cover according to Claim 14, characterized in that at least one latch extension (53) is associated with each bearing rod (12) or guide body (13), which cooperates in each case with a latch opening (54) of the immediately adjacent bearing rod (12) or guide body (13) (Figs. 21, 22).

16. Boot space cover according to Claim 14, characterized in that a latch extension (53) is associated in each case with a bearing rod (12) or guide body (13) which is at the front in closing (B) or opening direction (A) of the tarpaulin (15), which passes through all the remaining bearing rods (12) or guide bodies (13) in the open position (at A) of the tarpaulin (15) and which passes through the latch opening (54) of the bearing rod (12) or guide body (13) which is at the front in the opening (A) or closing direction (B) in a detachably coupling manner (Figs. 19, 20).

17. Boot space cover according to one of the preceding claims, characterized in that the coupling part (35) which is at the front in the closing direction (B) and/or the opening direction (A) is detachably locked with respect to the associated guide rail (11).

18. Boot space cover according to one of the preceding claims, characterized in that the tarpaulin (15) in the telescoped, coupled position (at A) of its bearing rods (12) or guide bodies (13) can be removed from or introduced into the front-end profile openings of the two guide rails (11).

19. Boot space cover according to one of the preceding claims, characterized in that the tarpaulin (15) in the telescoped, coupled-together position of its bearing rods (12) or guide bodies (13) can be removed from or introduced into the guide profiles (P) on the guide rail side through flap openings (57) which can be closed by means of flaps (K).

20. Boot space cover according to one of the preceding claims, characterized in that the guide bodies (13) or bearing rods (12) are secured against peripheral rotation about their longitudinal centre axis (M) (at 48, at 21, 22).

## Revendications

1. Recouvrement de compartiment de chargement pour véhicules automobiles, en particulier pour voitures particulière convertibles, avec un plan de recouvrement au moins partiellement flexible, susceptible d'être maintenu en une position ouverte regroupée ou en une position fermée déployée, plan de recouvrement sur lequel des barres de support sont fixées selon un espacement mutuel et parallèlement les unes aux autres, barres de support dont chacune porte à ses deux extrémités libre un corps de guidage, reçu chacun avec ajustement de forme, de manière à pouvoir être déplacée dans la direction longitudinale d'une glissière de guidage, dans un profilé de guidage de la glissière de guidage située coté carrosserie et s'étendant sensiblement à angle droit par rapport à la barre de support, au moins une partie de blocage étant prévue, fixant de façon désolidarisable le plan de recouvrement, dans une position regroupée de ces corps de guidage, alignés les uns à la suite des autres,
caractérisé en ce que la partie de blocage est formée par une partie de couplage (35) qui assure un couplage direct les unes aux autres, de façon facilement désolidarisable, des barres de support (12) et/ou des corps de guidage (13), indépendamment d'une fonction de guidage entre le profilé de guidage (P) du rail de guidage (11) et les corps de guidage (13), dans la position d'ouverture (en A) du plan de recouvrement (15) et avec possibilité de déplacement par rapport aux rails de guidage (11), conjointement avec le plan de guidage (15), et d'être enlevé des rails de guidage (11).

2. Recouvrement de compartiment de chargement selon la revendication 1,
caractérisé en ce que chaque partie de couplage (35) est reçue à l'intérieur du profilé, en particulier à l'intérieur du profilé de guidage (P) d'une glissière de guidage (11).

3. Recouvrement de compartiment de chargement selon la revendication 1,
caractérisé en ce que chaque partie de couplage (35) est disposée à l'extérieur du profilé de guidage (P).

4. Recouvrement de compartiment de chargement selon l'une des revendications précédentes,
caractérisé en ce que le plan de recouvrement (15) est pourvu, sur chacun des deux côtés longitudinaux parallèles aux glissières de guidage (11), d'au moins une partie de couplage (35).

5. Recouvrement de compartiment de chargement selon l'une des revendications précédentes,
caractérisé en ce que la partie de couplage (35) est configurée à peu près comme une pince et deux branches de pince (34), reliées ensemble par l'intermédiaire d'une âme frontale (36), formant entres elles (en 39) une ouverture d'introduction tournée dans la direction de fermeture (B) du plan de recouvrement (15) et recevant entres elles, en les entourant extérieurement, les corps de guidage (13) ou les extrémités des barres de support (12).

6. Recouvrement de compartiment de chargement selon la revendication 5
caractérisé en ce que la partie de couplage (35) en forme de pince entoure les corps de guidage (13), chaque fois entre deux épaulement de centrage (32, 33) situés du côté du corps de guidage.

7. Recouvrement de compartiment de chargement selon l'une des revendications 1 à 5,
caractérisé en ce que la partie de couplage (35) en pince entoure, avec ajustement de forme, les corps de guidage (13), côté frontal, avec un espace creux (44) présentant une contre-dépouille.

8. Recouvrement de compartiment de chargement selon la revendication 7,
caractérisé en ce que la partie de couplage (35) en forme de pince, avec un espace creux (44) présentant une contre-dépouille en forme de T, entoure au moins un appendice (45) à contre-dépouille en T, situé côté extrémité frontale, du corps de guidage (13) respectif.

9. Recouvrement de compartiment de chargement selon l'une des revendications précédentes,
caractérisé en ce que la partie de couplage (35) fixe (en 38) le corps de guidage (13), situé le plus à l'avant dans la direction d'ouverture (A) du plan de recouvrement (15).

10. Recouvrement de compartiment de chargement selon la revendication 9,
caractérisé en ce que la partie de couplage (35) fixe le corps de guidage (13) situé le plus à l'avant dans la direction d'ouverture (A) du plan de recouvrement (15), d'une façon désolidarisable ou difficilement désolidarisable, comme par exemple avec une ouverture d'encliquetage (38) ou analogue.

11. Recouvrement de compartiment de chargement selon l'une des revendications précédentes,
caractérisé en ce que sont prévus des corps de guidage (13), passant librement (en U) dans l'ouverture d'introduction (38, 39).

12. Recouvrement de compartiment de chargement selon la revendication 11,
caractérisé en ce que les corps de guidage (13), passant librement (en U) dans l'ouverture d'introduction (38, 39), sont chaque fois, dans la direction d'ouverture (A), placés devant un corps de guidage (13), situé en avant dans la direction de fermeture (B) et encliqueté dans l'ouverture d'introduction (38, 39);

13. Recouvrement de compartiment de chargement selon l'une des revendications précédentes,
caractérisé en ce que le corps de guidage (13) le plus à l'avant dans la direction de l'ouverture (A) du plan de recouvrement (15) est relié rigidement, par exemple fixé par un élément de matière ou analogue, à la partie de guidage (35) (figures 19, 20).

14. Recouvrement de compartiment de chargement selon l'une des revendications précédentes,
caractérisé en ce que chaque partie de couplage (35) forme au moins un appendice d'encliquetage (53) s'engageant, en formant un couplage désolidarisable, dans une ouverture d'encliquetage (54) d'une barre de support (12) ou d'un corps de guidage (13).

15. Recouvrement de compartiment de chargement selon la revendication 14,
caractérisé en ce qu'à chaque barre de support (12) ou corps de guidage (13) est associé au moins un appendice d'encliquetage (53), coopérant chaque fois avec une ouverture d'encliquetage (54) de la barre de support (12) immédiatement voisine, ou du corps de guidage immédiatement voisin (figures 21, 22).

16. Recouvrement de compartiment de chargement selon la revendication 14,
caractérisé en ce qu'un appendice d'encliquetage (53) est chaque fois associé à une barre de support (12) ou à un corps de guidage (13), en avant dans la direction de fermeture (B) ou d'ouverture (A) du plan de recouvrement (15), le corps de guidage (13) ou l'appendice de guidage (53) traversant, en position d'ouverture (en A) du plan de recouvrement (15), toutes les autres barres de guidage (12) ou tous les autres corps de guidage (13) et traversant, en créant un couplage désolidarisable, l'ouverture d'encliquetage (54) de chaque barre de guidage (12) ou corps de guidage (13) situé à l'avant dans la direction d'ouverture (A) ou de fermeture (B) (figures 19, 20).

17. Recouvrement de compartiment de chargement selon l'une des revendications précédentes,
caractérisé en ce que la partie de guidage (35), située à l'avant dans la direction de fermeture (B) et/ou la direction d'ouverture (A), est verrouillée de façon désolidarisable par rapport à la glissière de guidage (11) associée.

18. Recouvrement de compartiment de chargement selon l'une des revendications précédentes,
caractérisé en ce que le plan de recouvrement (15) peut être enlevé des ou introduit dans les ouvertures de profilé, situées côté extrémité frontale, des deux glissières de guidages (11), lorsque ses barres de support (12) ou ses corps de guidage (13) se trouvent dans la position regroupée, accouplée (en A).

19. Recouvrement de compartiment de chargement selon l'une des revendications précédentes,
caractérisé en ce que le plan de recouvrement (15) peut être enlevé des, ou introduit dans les, profilés de guidage, situés côté glissière de guidage, lorsque ses barres de support (12) ou ses corps de guidage (13) se trouvent dans la position regroupée, accouplée les uns aux autres, au moyen d'ouvertures à volet (57) pouvant être fermées à l'aide de volets (K).

20. Recouvrement de compartiment de chargement selon l'une des revendications précédentes,
caractérisé en ce que les corps de guidage (13) ou les barres de support (12) sont fixés (en 48, en 21, 22) de façon à empêcher leur rotation autour de leur axe longitudinal (M).
